# EUROPÄISCHE PATENTSCHRIFT

(11) **EP 0 442 557 B1**
(45) Veröffentlichungstag und Bekanntmachung des Hinweises auf die Patenterteilung: **02.11.1994**
(21) Anmeldenummer: 91200181.5
(22) Anmeldetag: 30.01.1991
(51) Int. Cl.: B01D 71/38, B01D 69/12, B01D 67/00, B01D 61/36

(54) **Mehrschichtige Membran und Verfahren zu ihrer Herstellung**
Composite membrane and process for producing same
Membrane composite et son procédé de fabrication

(30) Priorität: 10.02.1990 DE 4004153
(43) Veröffentlichungstag der Anmeldung: 21.08.1991
(73) Patentinhaber: METALLGESELLSCHAFT Aktiengesellschaft, 60015 Frankfurt (DE)
(72) Erfinder: Hänel, Peter, Dr., W-6368 Bad Vilbel (DE); Helmrich, Harald, Dr., W-6000 Frankfurt 56 (DE); Sander, Ulrich, Dr., W-6382 Friedrichsdorf (DE)

(56) Entgegenhaltungen:
- EP-A- 0 096 339
- DE-A- 2 441 311
- FR-A- 2 406 469
- US-A- 4 071 454
- US-A- 4 802 988
- PATENT ABSTRACTS OF JAPAN, Band 4, Nr. 126 (E-24), 5. September 1980; & JP-A-55 80 268 (FURUKAWA ELECTR.)
- PATENT ABSTRACTS OF JAPAN, Band 3, Nr. 114 (C-59), 21. September 1979; & JP-A-54 95 982 (NITTO DENKI)
- NEFF, H. Grundlagen und Anwendung der Röntgen-Feinstruktur-Analyse, München 1962, Seiten 299-303
- FUJII, K., Journal of Polymer Science, Part D, Pages 448-457 and 478-479, Vol. 5, 1971.

## Beschreibung

Die Erfindung bezieht sich auf eine mehrschichtige Membran, die aus einer Trägerschicht, einer porösen Stützschicht und einer Trennschicht zusammengesetzt ist sowie auf ein Verfahren zu ihrer Herstellung.

Aus der europäischen Patentschrift EP 96 339 B1 ist bereits eine Kompositmembran mit einer porenfreien Trennschicht aus einem ersten Polymeren und einer porösen Stützschicht aus einem zweiten Polymeren bekannt, bei der die porenfreie Trennschicht aus vernetztem Polyvinylalkohol oder Cellulosetriacetat besteht, wobei das für die Trennschicht der Membran verwendete Polymer nicht in die Poren der Stützschicht eingedrungen ist. Aus der europäischen Patentschrift ist ferner bekannt, daß die poröse Stützschicht auf ein Vlies oder ein gewebtes Tuch als Trägerschicht aufgebracht ist und daß die poröse Stützschicht aus Polyacrylnitril oder Polysulfon besteht. Schließlich wird in der europäischen Patentschrift vorgeschlagen, daß die vernetzte Polyvinylalkohol-Trennschicht durch Veretherung, veresterung oder Acetalisierung oder einer Kombination dieser Verfahren vernetzt und unter Wärmeeinwirkung in Wasser unlöslich gemacht worden ist. Die aus der vorgenannten europäischen Patentschrift bekannte mehrschichtige Membran kann vorteilhaft zur Trennung von Flüssigkeitsgemischen durch Pervaporation verwendet werden. Es hat sich allerdings gezeigt, daß die Trennleistung der bekannten mehrschichtigen Membran - also die pro m² Membranfläche in die Bestandteile aufgetrennte Stoffgemischmenge - gering ist, wobei die Trennleistungen einzelner Membranen unterschiedlich sind und sich im Verlauf des Dauerbetriebs verändern.

Eine der europäischen Patentschrift EP 96 339 entsprechende Kompositmembran wurde als Vergleich zur erfindungsgemäßen mehrschichtigen Membran gewählt.

Weiterhin ist aus dem US-Patent 4,802,988 eine Methode zur Konzentrierung einer wässrigen Lösung eines Glykols bekannt, bei der mehrschichtige Membranen verwendet werden, die eine porenfreie und in Gegenwart eines sauren Katalysators mit aliphatischen Polyaldehyden vernetzte Trennschicht aus Polyvinylalkohol, eine poröse Stützschicht aus Polysulfon und eine Trägerschicht aus nicht gewebten Polyesterfasern besitzen. Eine solche mehrschichtige Membran unterscheidet sich nur hinsichtlich des verwendeten Vernetzungsmittels von einer Membran gemäß der bereits o.g. Patentschrift, so daß sie in gleicher Hinsicht verbesserungsbedürftig ist.

Der Erfindung liegt daher die Aufgabe zugrunde, eine mehrschichtige Membran zu schaffen, die eine hohe, konstante Trennleistung besitzt und deren Trennleistung sich während des Dauerbetriebs nicht nachteilig verändert. Der Erfindung liegt ferner die Aufgabe zugrunde, ein Verfahren zur Herstellung dieser mehrschichtigen Membran zu schaffen.

Die der Erfindung zugrundeliegende Aufgabe wird durch eine mehrschichtige Membran gelöst, die aus einer Trägerschicht bestehend aus Polyamid-, Polyvinylidendifluorid-, Polyester- oder Glasfasern, einer porösen Stützschicht bestehend aus einem Polysulfon, Polyimid, Polyvinylalkohol, Polyurethan, Polyvinylidendifluorid, Polyethersulfon, Polyacrylnitril oder Polyetherimid und einer porenfreien Trennschicht zusammengesetzt ist, wobei die Trennschicht aus Polyvinylalkohol besteht, der eine geordnete Struktur mit großen mikrokristallinen Anteilen aufweist, deren Kristallite im Röntgenbeugungsdiagramm bei einem Beugungswinkel 2 ϑ von 19,6° bis 20° einen Reflex aufweisen, der eine Breite von 1,2° bis 1,5° hat. Diffraktometrische Texturmessungen haben ergeben, daß die unter einem Beugungswinkel 2 ϑ von 19,6 bis 20° reflektierenden Netzebenen der Polyvinylalkohol-Kristallite bevorzugt planparallel zur Oberfläche der porösen Stützschicht angeordnet sind und dadurch eine mikrokristalline Schichtstruktur in der porenfreien Trennschicht ausbilden. Ein weiterer Beweis für die Existenz großer mikrokristalliner Anteile in der Struktur der porenfreien Trennschicht ergibt sich aus einer "Differential Scanning Calorimetry-Analyse" (DSC), die zwischen 160 und 200°C einen scharfen endothermen Peak erbringt, wie er für Polyvinylalkohol-Mikrokristallite zu erwarten ist. Schließlich ist auch durch eine Infrarot-spektroskopische Analyse der große mikrokristalline Anteil in der Struktur der porenfreien Trennschicht in Form eines intensiven Peaks bei 1142 bis 1146 cm⁻¹ nachweisbar. Es hat sich in überraschender Weise gezeigt, daß die aus Polyvinylalkohol bestehende Trennschicht dann eine hohe und konstante Trennleistung besitzt, wenn sie die erfindungsgemäße mikrokristalline geordnete Struktur besitzt und mit der erfindungsgemäßen Trägerschicht bzw. der erfindungsgemäßen porösen Stützschicht verbunden ist.

Die entsprechend der Erfindung gestaltete mehrschichtige Membran hat besonders gute Gebrauchseigenschaften (hohe mechanische Festigkeit, nahezu konstante Trennleistung während des Dauerbetriebs), wenn die Trägerschicht eine Dicke von 30 bis 500 µm, die poröse Stützschicht eine Dicke von 30 bis 200 µm und die Trennschicht eine Dicke von 0,5 bis 5 µm aufweist.

Die der Erfindung zugrundeliegende Aufgabe wird ferner durch die Schaffung eines Verfahrens zur Herstellung der mehrschichtigen Membran gelöst, bei dem aus dem Trägermaterial und der porösen Stützschicht zunächst ein Verbundmaterial hergestellt wird, bei dem dann auf die Stützschicht des Verbundmaterials eine Lösung aufgebracht wird, die 1 bis 10 Gew.-% Polyvinylalkohol und Rest Wasser enthält und die vor ihrer Verwendung 3 bis 20 Tage bei -10 bis +10°C, vorzugsweise 0 bis +5°C, gelagert wird und bei dem schließlich das mit der wässrigen Polyvinylalkohol-Lösung beschichtete Verbundmaterial bei 100 bis 180°C während einer Zeit von 1 bis 60 Minuten behandelt wird. Es hat sich in überraschender Weise gezeigt, daß die aus Polyvinylalkohol bestehende Trennschicht dann eine hohe und konstante Trennleistung aufweist, wenn sie nach dem vorstehend beschriebenen Verfahren hergestellt wird, wobei ihre mikrokristalline geordnete Struktur überraschenderweise durch die erfindungsgemäße Lagerung der Lösung bei tiefen Temperaturen und die erfindungsgemäße Behandlung des beschichteten Verbundmaterials bei höheren Temperaturen erzeugt wird.

In weiterer Ausgestaltung der Erfindung ist vorgesehen, daß die wässrige Polyvinylalkohol-Lösung vor der Lagerung einen Verseifungsgrad von 98 bis 100 % und ein Molekulargewicht von 10 000 bis 250 000 Dalton aufweist. Da die nach der Erfindung zu verwendende Polyvinylalkohol-Lösung durch Verseifung von Polyvinylacetat hergestellt wird, legt der erfindungsgemäße Verseifungsgrad fest, daß möglichst viele der Estergruppen des Polyvinylacetats verseift werden sollen.

Nach der Erfindung ist ferner vorgesehen, daß die auf das Verbundmaterial aufgebrachte Polyvinylalkohol-Lösung durch Verdünnen einer konzentrierten Polyvinylalkohol-Lösung mit Wasser hergestellt wird, die 8 bis 20 Gew.-% Polyvinylalkohol und Rest Wasser enthält und die vor dem Verdünnen 3 bis 20 Tage bei -10 bis +10°C, vorzugsweise 0 bis +5°C, gelagert wird. Überraschenderweise wurde festgestellt, daß der positive Einfluß der Langzeitlagerung auf die Eigenschaften der Trennschicht auch dann erreicht wird, wenn eine konzentrierte wässrige Polyvinylalkohol-Lösung während 3 bis 20 Tagen bei -10 bis +10°C gelagert und erst unmittelbar vor dem Aufbringen auf das Verbundmaterial auf eine Konzentration von 1 bis 10 Gew.-% Polyvinylalkohol verdünnt wird.

Die erfindungsgemäße Membran hat besonders gute Trenneigenschaften, wenn die wässrige Polyvinylalkohol-Lösung unmittelbar vor dem Aufbringen auf das Verbundmaterial filtriert wird, wobei die Poren des Filters einen Durchmesser von 40 bis 100 µm haben. Durch diese Maßnahme wird erreicht, daß gröbere feste Agglomerate, die sich eventuell bei der Langzeitlagerung der Polyvinylalkohol-Lösung bilden, abgetrennt werden, was sich vorteilhaft auf die Homogenität der Trennschicht auswirkt, da durch die nach der Erfindung vorgesehene Filtration Störstellen in der mikrokristallinen geordneten Struktur zu vermeiden sind.

Nach der Erfindung ist es zweckmäßig, wenn der wässrigen Polyvinylalkohol-Lösung unmittelbar vor dem Aufbringen auf das Verbundmaterial 0,01 bis 0,1 Gew.-% eines Netzmittels zugegeben werden. Hierdurch wird eine gute, gleichmäßige Benetzung der porösen Stützschicht erreicht.

Nach der Erfindung ist auch vorgesehen, daß der wässrigen Polyvinylalkohol-Lösung unmittelbar vor dem Aufbringen auf das Verbundmaterial 1 bis 10 Gew.-% eines Vernetzungsmittels, bezogen auf den Polyvinylalkohol-Gehalt der Lösung, zugesetzt werden. Durch diese an sich bekannte Maßnahme wird erreicht, daß die Eigenschaften der Trennschicht variiert und speziellen Trennproblemen angepaßt werden können. Als Vernetzungsmittel können z.B. di- oder multifunktionelle Carbonsäuren, Aldehyde oder Halogenkohlenwasserstoffe verwendet werden.

Nach der Erfindung hat es sich in einigen Fällen als vorteilhaft erwiesen, wenn das beschichtete Verbundmaterial vor der Temperaturbehandlung mit Mikrowellen bestrahlt wird. Hierdurch erfolgt eine vergleichsweise schnelle Trocknung der Trennschicht, so daß die Wirkung der nachfolgenden Temperaturbehandlung, die insbesondere in der gleichmäßigen Ausbildung einer mikrokristallinen geordneten Struktur besteht, nicht durch die Verdampfung des Wassers aus der Trennschicht beeinträchtigt wird.

Zur Vermeidung von Poren innerhalb der Trennschicht ist es vorteilhaft, die Trennschicht in mehreren Teilschritten (Aufbringen der Lösung und thermische Behandlung ist jeweils ein Teilschritt) zu erzeugen. Es hat sich überraschenderweise gezeigt, daß die in Teilschritten erzeugten Trennschichten keine inneren Grenzflächen aufweisen.

Die erfindungsgemäße mehrschichtige Membran kann besonders vorteilhaft zur Trennung flüssiger, dampf- und gasförmiger Stoffgemische verwendet werden. Während des Langzeiteinsatzes dieser Membran kommt es nicht zu einem nachteiligen Abfall der Trennleistung, und die mechanischen Eigenschaften der Membran bleiben auch im Dauerbetrieb erhalten. Die Membran hat sich bei Pervaporationsverfahren besonders gut bewährt.

Der Gegenstand der Erfindung wird nachfolgend anhand eines Ausführungsbeispiels näher erläutert.

Vollständig verseifter Polyvinylalkohol wurde bei einer Temperatur von 90 bis 95°C innerhalb von 3 bis 5 Stunden in destilliertem Wasser gelöst, so daß eine Lösung entstand, die 10 Gew.-% Polyvinylalkohol enthielt, der einen Verseifungsgrad von 99 % und ein Molekulargewicht von 100 000 Dalton aufwies. Diese Lösung wurde 72 Stunden bei 0°C gelagert, während der Lagerung trat Trübung sowie eine Erhöhung der Viskosität der Lösung ein, was auf Assoziationen der Makromoleküle des Polyvinylalkohols zurückgeführt wird. Die bei tiefen Temperaturen gelagerte Lösung wurde auf Raumtemperatur erwärmt und durch Zugabe von Wasser auf eine Polyvinylalkohol-Konzentration von 5 Gew.-% verdünnt. Anschließend wurde die verdünnte Lösung filtriert, wofür ein Filter mit einer Porenweite von 80 µm zur Anwendung kam. Nach der Filtration wurden der Lösung 0,1 Gew.-% eines Netzmittels zugesetzt.

Diese Lösung wurde mittels der Rakeltechnik auf ein Verbundmaterial aufgebracht, das aus einer aus Polyamidfasern bestehenden Trägerschicht und einer aus Polyvinylidendifluorid bestehenden porösen Stützschicht zusammengesetzt war. Die Trägerschicht hatte eine Dicke von 300 µm, und die poröse Stützschicht hatte eine Dicke von 100 µm. Das mit der Polyvinylalkohol-Lösung beschichtete Verbundmaterial wurde 45 Minuten bei einer Temperatur von 130°C behandelt. Die Trennschicht hatte nach der thermischen Behandlung eine Dicke von 1,5 µm.

Bei einer Röntgenbeugungsanalyse wurde festgestellt, daß die Reflexbreite der Trennschicht 1,25° beträgt und bei einem Beugungswinkel von 2 ϑ = 19,82° liegt. Die Intensität des Reflexes der Trennschicht der erfindungsgemäßen Membran wurde mit 100 bewertet. Bei einer Röntgenbeugungsanalyse der bekannten mehrschichtigen Polyvinylalkohol-Membran wurde festgestellt, daß die Reflexbreite der Trennschicht 1,65° beträgt und daß der Reflex bei einem Beugungswinkel von 2 ϑ bei 19,63° liegt, wobei die Intensität des Reflexes weniger als 50 % des Reflexes der erfindungsgemäßen Membran beträgt.

Die Röntgenbeugungsanalyse wurde mit einem rechnergestützten Diffraktometer unter Verwendung von CoKα- und CuKα-Strahlung durchgeführt. Alle Proben wurden auf Aluminiumblechen als Träger präpariert, weil Aluminium in dem für Polymere wichtigen Bereich kleiner Beugungswinkel keine Röntgenreflexe erzeugt. Die Dicke der Trennschicht wurde mit einem Rasterelektronenmikroskop bestimmt, wobei die Dicke der Vergleichsprobe 1,6 µm betrug. Die Ergebnisse der Röntgenbeugungsuntersuchung zeigen, daß die erfindungsgemäße Membran gegenüber der bekannten Membran einen hohen Ordnungsgrad und eine Struktur mit großen mikrokristallinen Anteilen aufweist, die für die vorteilhaften Leistungs- und Gebrauchseigenschaften der Membran verantwortlich sind.

Die entsprechend der Erfindung beschaffene und hergestellte Membran wurde zur Trennung von 2-Propanol-Wasser-Gemischen im Dauerbetrieb während 6 Wochen erprobt. Hierbei ergab sich folgendes Leistungsverhalten:
Bei einer Zusammensetzung des zu trennenden Gemisches von 90 Gew.-% 2-Propanol und 10 Gew.-% Wasser sowie einer Trenntemperatur von 93°C wurde im Permeat ein 2-Propanol-Gehalt von < 1 Gew.-% bei einem Permeatfluß von 1,8 kg/m² Membranfläche und Stunde erreicht. Das Permeat enthält mehr als 99 Gew.-% Wasser.

## Patentansprüche

1. Mehrschichtige Membran, die aus einer Trägerschicht bestehend aus Polyamid-, Polyvinylidendifluorid, Polyester- oder Glasfasern, einer porösen Stützschicht bestehend aus einem Polysulfon, Polyvinylidendifluorid, Polyimid, Polyvinylalkohol, Polyurethan, Polyethersulfon, Polyacrylnitril oder Polyetherimid und einer porenfreien Trennschicht zusammengesetzt ist, wobei die Trennschicht aus Polyvinylalkohol besteht, der eine geordnete Struktur mit großen mikrokristallinen Anteilen aufweist, deren Kristallite im Röntgenbeugungsdiagramm bei einem Beugungswinkel 2 ϑ von 19,6° bis 20° einen Reflex aufweisen, der eine Breite von 1,2° bis 1,5° hat.

2. Mehrschichtige Membran nach Anspruch 1, dadurch gekennzeichnet, daß die Trägerschicht eine Dicke von 30 bis 500 µm, die poröse Stützschicht eine Dicke von 30 bis 200 µm und die Trennschicht eine Dicke von 0,5 bis 5 µm hat.

3. Verfahren zur Herstellung der mehrschichtigen Membran nach den Ansprüchen 1 bis 2, bei dem aus der Trägerschicht und der porösen Stützschicht ein Verbundmaterial hergestellt und auf die Stützschicht des Verbundmaterials eine Lösung aufgebracht wird, welche 1 bis 10 Gew.-% Polyvinylalkohol und Rest Wasser enthält und die vor ihrer Verwendung 3 bis 20 Tage bei -10 bis +10°C gelagert wird und daß das mit der wässrigen Polyvinylalkohol-Lösung beschichtete Verbundmaterial bei 100 bis 180°C während einer Zeit von 1 bis 60 Minuten behandelt wird.

4. Verfahren nach Anspruch 3, dadurch gekennzeichnet, daß die wässrige Polyvinylalkohol-Lösung vor ihrer Verwendung 3 bis 20 Tage bei 0 bis +5°C gelagert wird.

5. Verfahren nach den Ansprüchen 3 bis 4, dadurch gekennzeichnet, daß die wässrige Polyvinylalkohol-Lösung vor der Lagerung einen Verseifungsgrad von 98 bis 100 % und ein Molekulargewicht von 10 000 bis 250 000 Dalton aufweist.

6. Verfahren nach den Ansprüchen 3 bis 5, dadurch gekennzeichnet, daß die auf das Verbundmaterial aufgebrachte Polyvinylalkohol-Lösung durch Verdünnen einer konzentrierten Polyvinylalkohol-Lösung mit Wasser hergestellt wird, die 8 bis 20 Gew.-% Polyvinylalkohol und Rest Wasser enthält und die vor dem Verdünnen 3 bis 20 Tage bei -10 bis +10°C gelagert wird.

7. Verfahren nach Anspruch 6, dadurch gekennzeichnet, daß die konzentrierte Polyvinylalkohol-Lösung vor dem Verdünnen mit Wasser 3 bis 20 Tage bei 0 bis 5°C gelagert wird.

8. Verfahren nach den Ansprüchen 3 bis 7, dadurch gekennzeichnet, daß die wässrige Polyvinylalkohol-Lösung unmittelbar vor dem Aufbringen auf das Verbundmaterial filtriert wird, wobei die Poren des Filters einen Durchmesser von 40 bis 100 µm haben.

9. Verfahren nach den Ansprüchen 3 bis 8, dadurch gekennzeichnet, daß der wässrigen Polyvinylalkohol-Lösung unmittelbar vor dem Aufbringen auf das Verbundmaterial 0,01 bis 0,1 Gew.-% eines Netzmittels zugegeben werden.

10. Verfahren nach den Ansprüchen 3 bis 9, dadurch gekennzeichnet, daß der wässrigen Polyvinylalkohol-Lösung unmittelbar vor dem Aufbringen auf das Verbundmaterial 1 bis 10 Gew.-% eines Vernetzungsmittels, bezogen auf den Polyvinylalkohol-Gehalt der Lösung, zugesetzt werden.

11. Verfahren nach den Ansprüchen 3 bis 10, dadurch gekennzeichnet, daß das beschichtete Verbundmaterial vor der Temperaturbehandlung mit Mikrowellen bestrahlt wird.

12. Verfahren nach den Ansprüchen 3 bis 11, dadurch gekennzeichnet, daß die Trennschicht in mehreren Teilschritten erzeugt wird.

13. Verwendung der mehrschichtigen Membran nach den Ansprüchen 1 und 2 zur Trennung flüssiger, dampf- und gasförmiger Stoffgemische.

## Claims

1. A multilayer membrane, which is composed of a carrier layer consisting of fibres of polyamide, polyvinylidene difluoride, polyester or glass, a porous supporting layer consisting of a polysulphone, polyvinylidene difluoride, polyimide, polyvinyl alcohol, polyurethane, polyethersulphone, polyacrylonitrile or polyether imide, and a non-porous separating layer, in which the separating layer consists of polyvinyl alcohol which has an ordered structure having a high microcrystalline content, the crystallites of which exhibit in the X-ray diffraction pattern a reflection in a range of 1.2 to 1.5 degrees at a diffraction angle 2 of 19.6° to 20°.

2. A multilayer membrane according to Claim 1, characterised in that the carrier layer has a thickness from 30 to 500 µm, the porous supporting layer has a thickness from 30 to 200 µm and the separating layer has a thickness from 0.5 to 5 µm.

3. A process of manufacturing the multilayer membrane according to Claims 1 to 2, in which a composite material is made from the carrier layer and the porous supporting layer and a solution which contains 1 to 10 % by weight polyvinyl alcohol, balance water, and which before use has been stored at temperatures from -10 to +10° C for 3 to 20 days, is applied to the supporting layer of the composite material, and the composite material coated with the aqueous solution of polyvinyl alcohol is treated at a temperature from 100 to 180° C for a period of 1 to 60 minutes.

4. A process according to Claim 3, characterised in that the aqueous polyvinyl alcohol solution is stored for 3 to 20 days at 0 to +5° C before its use.

5. A process according to Claims 3 to 4, characterised in that the aqueous solution of polyvinyl alchohol before it is stored has a degree of saponification of 98 to 100 % and a molecular weight of 10,000 to 250,000 daltons.

6. A process according to Claims 3 to 5, characterised in that the polyvinyl alcohol solution applied to the composite material is prepared in that a concentrated polyvinyl alcohol solution which contains 8 to 20 % by weight polyvinyl alcohol, balance water, is diluted with water, which concentrated solution has been stored at temperatures from -10 to +10° C for 3 to 20 days before it is diluted.

7. A process according to Claim 6, characterised in that the concentrated polyvinyl alcohol solution is stored for 3 to 20 days at 0 to 5° C before dilution with water.

8. A process according to Claims 3 to 7, characterised in that the aqueous polyvinyl alcohol solution immediatedly before it is applied to the composite material is filtered, in which the pores of the filter are 40 to 100µm in diameter.

9. A process according to Claims 3 to 8, characterised in that 0.01 to 0.1 % by weight of a wetting agent are added to the aqueous solution of polyvinyl alcohol immediately before it is applied to the composite material.

10. A process according to Claims 3 to 9, characterised in that a cross-linking agent in an amount of 1 to 10 % by weight, based on the polyvinyl alcohol content of the solution, is added to the aqueous solution of polyvinyl alcohol immediately before that solution is applied to the composite material.

11. A process according to Claims 3 to 10, characterised in that the coated composite material is irradiated with microwaves before its temperature treatment.

12. A process according to Claims 3 to 11, characterised in that the separating layer is produced in a plurality of partial steps.

13. The use of the multilayer membrane according to Claims 1 and 2 for the separation of liquid, vaporous and gaseous mixtures.

## Revendications

1. Membrane stratifiée composée d'une couche support en fibres de polyamide, de poly(difluorure de vinylidène), de polyester ou de verre, d'une couche d'appui poreuse en polysulfone, en poly(difluorure de vinylidène), en polyimide, en alcool polyvinylique, en polyuréthane, en polyéthersulfone, en polyacrylonitrile ou en polyétherimide et d'une couche de séparation exempte de pores, la couche de séparation étant en alcool polyvinylique de structure ordonnée, à grandes proportions microcristallines, dont des cristallites au diagramme de diffraction de rayons X ont, pour un angle de diffraction 2 ϑ de 19,6 à 20°, une réflexion ayant une largeur de 1,2 à 1,5°.

2. Membrane stratifiée suivant la revendication 1, caractérisée en ce que la couche support a une épaisseur de 30 à 500 mm, la couche d'appui poreuse une épaisseur de 30 à 200 mm et la couche de séparation une épaisseur de 0,5 à 5 mm.

3. Procédé de fabrication d'une membrane stratifiée suivant les revendications 1 à 2, qui consiste à fabriquer un matériau composite en la couche support et la couche d'appui poreuse, et à déposer sur la couche d'appui du matériau composite une solution qui contient de 1 à 10 % en poids d'alcool polyvinylique, le reste étant de l'eau et qui a été stockée avant son utilisation pendant 3 à 20 jours entre -10 et +10°C, et à traiter le matériau composite revêtu de la solution aqueuse d'alcool polyvinylique entre 100 et 180°C pendant une durée de 1 à 60 minutes.

4. Procédé suivant la revendication 3, caractérisé en ce qu'il consiste à stocker la solution aqueuse d'alcool polyvinylique avant son utilisation pendant 3 à 20 jours entre 0 et +5°C.

5. Procédé suivant la revendication 3 ou 4, caractérisé en ce que la solution aqueuse d'alcool polyvinylique a, avant son stockage, un indice de saponification de 98 à 100 % et une masse moléculaire de 10 000 à 250 000 daltons.

6. Procédé suivant l'une quelconque des revendications 3 à 5, caractérisé en ce que la solution d'alcool polyvinylique déposée sur le matériau composite est préparée en diluant une solution concentrée d'alcool polyvinylique à l'eau, qui contient de 8 à 20 % en poids d'alcool polyvinylique, le reste étant de l'eau et qui est stocké avant la dilution pendant 3 à 20 jours entre -10 et +10°C.

7. Procédé suivant la revendication 6, caractérisé en ce qu'il consiste à stocker la solution concentrée d'alcool polyvinylique avant la dilution à l'eau pendant 3 à 20 jours entre 0 et 5°C.

8. Procédé suivant l'une quelconque des revendications 3 à 7, caractérisé en ce qu'il consiste à filtrer la solution aqueuse d'alcool polyvinylique juste avant de la déposer sur le matériau composite, les pores du filtre ayant un diamètre de 40 à 100 mm.

9. Procédé suivant l'une quelconque des revendications 3 à 8, caractérisé en ce qu'il consiste à ajouter de 0,01 à 0,1 % en poids d'un agent mouillant à la solution aqueuse d'alcool polyvinylique juste avant le dépôt sur le matériau composite.

10. Procédé suivant l'une quelconque des revendications 3 à 9, caractérisé en ce qu'il consiste à ajouter de 1 à 10 % en poids d'un agent réticulant par rapport à la teneur en alcool polyvinylique de la solution à la solution aqueuse d'alcool polyvinylique juste avant le dépôt sur le matériau composite.

11. Procédé suivant l'une quelconque des revendications 3 à 10, caractérisé en ce qu'il consiste à exposer le matériau composite revêtu avant le traitement en température à des micro-ondes.

12. Procédé suivant l'une quelconque des revendications 3 à 11, caractérisé en ce qu'il consiste à produire la couche de séparation en plusieurs stades.

13. Utilisation de la membrane stratifiée suivant la revendication 1 ou 2 pour séparer des mélanges de matières liquides ou sous forme de vapeur et de gaz.
